# EUROPÄISCHE PATENTSCHRIFT

(11) **EP 3 018 253 B1**
(45) Veröffentlichungstag und Bekanntmachung des Hinweises auf die Patenterteilung: **21.09.2016**
(21) Anmeldenummer: 14191675.9
(22) Anmeldetag: 04.11.2014
(51) Int. Cl.: D21F 1/00, B23P 15/16

(54) **Vorrichtung und Verfahren zum Herstellen von Wendelsieben**
Device and method for manufacturing spiral link fabrics
Dispositif et procédé de fabrication de tamis à spirales

(43) Veröffentlichungstag der Anmeldung: 11.05.2016
(73) Patentinhaber: Karl Mayer Textilmaschinenfabrik GmbH, 63179 Obertshausen (DE)
(72) Erfinder: Ruh, Michael, 63165 Mühlheim (DE); Funk, Michael-Heinz, 63512 Hainburg (DE); Schratz, Simon, 60314 Frankfurt (DE)
(74) Vertreter: Knoblauch, Andreas

(56) Entgegenhaltungen:
- EP-A1- 0 041 685
- DE-B4-102007 052 594

## Beschreibung

Die Erfindung betrifft eine Vorrichtung zum Herstellen von Wendelsieben mit einer Arbeitsfläche und einer Fügeeinrichtung, mit der Wendeln auf der Arbeitsfläche ablegbar sind und die mit einer Bewegungsrichtung von einem ersten Rand der Arbeitsfläche zu einem zweiten Rand der Arbeitsfläche über die Arbeitsfläche bewegbar ist, wobei die Fügeeinrichtung einen Verdrängungssporn aufweist, der bei einer Bewegung der Fügeeinrichtung über die Arbeitsfläche die auf der Arbeitsfläche liegenden Wendeln verschiebt, um Platz für neu abzulegende Wendeln zu schaffen.

Ferner betrifft die Erfindung ein Verfahren zum Herstellen von Wendelsieben, bei dem man nacheinander mehrere Wendeln mit einer Fügeeinrichtung, die man in eine Bewegungsrichtung von einem ersten Rand einer Arbeitsfläche zu einem zweiten Rand der Arbeitsfläche über die Arbeitsfläche verlagert, auf der Arbeitsfläche ablegt und beim Ablegen nebeneinander angeordnete Wendeln durch die Fügeeinrichtung miteinander in Eingriff bringt, wobei bei einer Bewegung der Fügeeinrichtung über die Arbeitsfläche die auf der Arbeitsfläche liegenden Wendeln durch einen Verdrängungssporn der Fügeeinrichtung verschoben werden, um Platz für neu abzulegende Wendeln zu schaffen.

Eine derartige Vorrichtung und ein derartiges Verfahren sind beispielsweise aus DE 10 2007 052 594 B4 bekannt. Hier werden die Wendeln durch eine Wickeleinrichtung oberhalb der Arbeitsfläche erzeugt, wobei die Wickeleinrichtung gemeinsam mit der Fügeeinrichtung über die Arbeitsfläche bewegt wird. Die Fügeeinrichtung weist einen Verdrängungssporn auf, mit dem die bereits auf der Arbeitsfläche abgelegten Wendeln soweit seitlich verschoben werden, dass eine neue Wendel auf der Arbeitsfläche abgelegt werden kann und dabei mit der benachbarten, bereits abgelegten Wendel in Eingriff kommt. In den Überlappungsbereich zwischen den benachbarten Wendeln kann dann ein Steckdraht eingeschoben werden, um die Wendeln miteinander zu verbinden.

In der Praxis hat sich allerdings herausgestellt, dass mit der aus
DE 10 2007 052 594 B4 beschriebenen Vorgehensweise eine prozesssichere Automatisierung des Herstellungsvorgangs nicht zuverlässig erzielt werden kann.

EP 0 041 685 A1 zeigt ein Verfahren und eine Vorrichtung zum Zusammenfügen von Wendeln aus Metalldraht bzw. Kunststoffdraht zu Flächengebilden. Hier wird nach dem Ablegen einer neu zu verlegenden Wendeln und dem Verbinden dieser Wendeln mit bereits auf einer Fügebank liegenden Wendeln die Gesamtheit der Wendeln um eine Breite der Wendeln verschoben. Hierzu wird das Flächengebilde zwischen einem beweglichen und pneumatisch betätigten Transportstück und einer Andruckfläche eingeklemmt. Das Transportstück wird dann mit der Gegenfläche gemeinsam bewegt.

Der Erfindung liegt die Aufgabe zugrunde, die Herstellung von Wendelsieben prozesssicher zu machen.

Diese Aufgabe wird bei einer Vorrichtung der eingangs genannten Art dadurch gelöst, dass im Bereich des ersten Randes ein Schieber an der Arbeitsfläche angeordnet ist, der senkrecht zur Bewegungsrichtung der Fügeeinrichtung verlagerbar ist, um das dem ersten Rand benachbarte Ende der bereits auf der Arbeitsfläche liegenden Wendeln zu verschieben, bevor die Fügeeinrichtung mit dem Ablegen einer neuen Wendel beginnt.

Mit dem Schieber wird jedenfalls für den Beginn des Ablegevorgangs einer jeden neuen Wendel die Aufgaben des Verschiebens von der Fügeeinrichtung gelöst. Man kann mit Hilfe des Schiebers das Ende der bereits auf der Arbeitsfläche abgelegten Wendeln verschieben und somit Raum für die neue Wendel schaffen, bevor die Fügeeinrichtung hier eine neue Wendel ablegt. Da die Fügeeinrichtung zumindest am Beginn der Ablage nur noch eine Aufgabe erfüllen muss, nämlich die Wendel auf der Arbeitsfläche abzulegen, ergibt sich hier eine erhöhte Prozesssicherheit.

Hierbei ist bevorzugt, dass der Schieber einen Bewegungshub aufweist, der mindestens der Breite des Verdrängungssporns entspricht. Mit dem Schieber lässt sich also ein Freiraum erzeugen, in den der Verdrängungssporn eingesetzt werden kann, ohne dass er bei diesem Einsetzen bereits eine Verdrängungsbewegung durchführen muss. Dadurch wird die Gefahr klein gehalten, dass der Verdrängungssporn auf der Arbeitsfläche liegende Wendel quetscht oder auf andere Weise verformt oder beschädigt.

Vorzugsweise ist ein Anschlag auf der Arbeitsfläche vorgesehen, an dem die Fügeeinrichtung entlang bewegbar ist, wobei der Schieber zwischen dem Anschlag und der Arbeitsfläche angeordnet ist. Der Anschlag kann sich also nach wie vor über die gesamte Breite der Arbeitsfläche erstrecken, also vom ersten Rand zum zweiten Rand. Dies erleichtert zum einen die Befestigung des Anschlags relativ zur Arbeitsfläche und ermöglicht zum anderen eine ausreichend lange Führung der Fügeeinrichtung bei ihrer Bewegung über die Arbeitsfläche.

Vorzugsweise ist im Bereich des Schiebers ein Niederhalter vorgesehen, der zwischen einer Abdeckposition, in der er auf der Arbeitsfläche liegende Wendeln abdeckt, und eine Freigabeposition, in der ein Zugang der Fügeeinrichtung zu auf der Arbeitsfläche liegenden Wendeln möglich ist, bewegbar ist. Der Niederhalter liegt auf den Wendeln auf, wenn die Wendeln durch den Schieber quer zur Bewegungsrichtung der Fügeeinrichtung verschoben werden. Der Niederhalter sichert also dagegen, dass die Wendeln bei dieser Verschiebebewegung nach oben, d.h. von der Arbeitsfläche weg, ausweichen. Nach der erfolgten Verschiebung des Endes der Wendeln, wenn also der für die Fügeeinrichtung erforderliche Platz geschaffen worden ist, kann der Niederhalter wegbewegt werden, damit die Fügeeinrichtung ihre Tätigkeit beginnen kann. Der Niederhalter stört also die Funktion der Fügeeinrichtung nicht.

Vorzugsweise ist im Bereich des ersten Randes eine Abdeckeinrichtung mit einem Abstand zur Arbeitsfläche angeordnet. Dieser Abstand entspricht im Wesentlichen der Höhe der Wendeln, so dass die Wendeln zwar auf der Arbeitsfläche verschoben werden können, aber nicht von der Arbeitsfläche weg vertikal ausweichen können. Die Abdeckeinrichtung kann beispielsweise als Abdeckblech ausgebildet sein. Sie hat damit nur eine relativ geringe Dicke. Damit kann die Fügeeinrichtung auch im Bereich der Abdeckeinrichtung nahe genug an die Wendeln heranbewegt werden, um eine neue Wendel auf der Arbeitsfläche abzulegen und mit einer bereits auf der Arbeitsfläche befindlichen Wendel in Eingriff zu bringen.

Auch ist von Vorteil, wenn im Bereich des ersten Randes eine lösbare Siebfixierung vorgesehen ist. Diese Siebfixierung wirkt auf die bereits auf der Arbeitsfläche liegenden und miteinander verbundenen Wendeln und hindert sie daran, sich von der Arbeitsfläche wegzubewegen. Die Siebfixierung wird gelöst, wenn die Wendeln durch den Schieber quer zur Bewegungsrichtung der Fügeeinrichtung verschoben werden. Hierbei ist es lediglich erforderlich, die Kraft, mit der die Siebfixierung auf die Wendeln, also das bereits gebildete Sieb, wirkt, zu verringern. Es ist nicht erforderlich, die Siebfixierung von den Wendeln wegzubewegen. Die Siebfixierung kann nach wie vor einen Bewegungsraum der Wendeln für eine Bewegung von der Arbeitsfläche weg begrenzen. Nach der erfolgten Verschiebung des Endes der Wendeln kann die Siebfixierung hingegen mit einer ausreichenden Klemmkraft auf die Wendeln wirken und sie auf der Arbeitsfläche festhalten. Dies ist insbesondere für das Einsetzen eines Fügedraht von Vorteil, weil die Wendeln durch die Klemmfixierung auf der Arbeitsfläche eine definierte Position haben.

Vorzugsweise ist eine Steckdrahteinführvorrichtung vorgesehen, die mit der Fügeeinrichtung synchronisiert ist. Die Steckdrahteinführvorrichtung kann einen Steckdraht in den Überlappungsbereich zwischen benachbarten Wendeln einführen. Hierbei ist die Synchronisierung zwischen der Steckdrahteinführvorrichtung und der Fügeeinrichtung so ausgebildet, dass die Spitze des Steckdrahtes mit einem vorbestimmten Abstand der Bewegung der Fügeeinrichtung folgt. Es gibt also nur relativ kurze Abschnitte von benachbarten und miteinander in Eingriff stehenden Wendeln, die durch den Steckdraht noch nicht miteinander verbunden sind.

Die Erfindung wird bei einem Verfahren der eingangs genannten Art dadurch gelöst, dass man die Wendeln an ihrem dem ersten Rand benachbarten Ende quer zu ihrer Längsrichtung verschiebt, bevor die Fügeeinrichtung mit dem Ablegen einer neuen Wendel beginnt.

Wie oben in Zusammenhang mit der Vorrichtung erläutert, wird durch dieses Verschieben ein Freiraum geschaffen, in den die Fügeeinrichtung den Beginn, also das dem ersten Rand benachbarte Ende, einer neuen Wendel einlegen kann. Zu Beginn des Ablegevorgangs ist die Arbeit der Fügeeinrichtung also auf das reine Ablegen begrenzt, ohne dass die Fügeeinrichtung in diesem Augenblick bereits eine Querverschiebung der Wendel bewerkstelligen muss. Die Gefahr, dass beim Ablegen der neuen Wendel bereits auf der Arbeitsfläche liegende Wendeln beschädigt werden, beispielsweise durch eine Verformung oder ein Zusammendrücken, wird daher klein gehalten.

Vorzugsweise deckt man das Ende der Wendeln beim Verschieben ab. Damit verhindert man, dass die Wendeln beim Verschieben von der Arbeitsfläche abheben oder sich auf andere Weise unerwünscht bewegen. Das Abdecken bedeutet lediglich eine Begrenzung der Bewegungsmöglichkeiten der Wendeln in eine Richtung vertikal von der Arbeitsfläche weg. Eine Bewegung der Wendeln parallel zur Arbeitsfläche, also horizontal, wird hingegen zugelassen.

Vorzugsweise fixiert man die Wendeln im Bereich des ersten Endes nach dem Verschieben gegen eine Bewegung. Sobald die Wendeln im Bereich des Endes verschoben worden sind und ein ausreichender Raum für das Ablegen eines neuen Wendeis zur Verfügung steht, ist das Fixieren der bereits auf der Arbeitsfläche liegenden Wendeln von Vorteil, weil diese Wendeln dann in einer vorbestimmten Position gehalten werden, so dass ein Steckdraht eingeführt werden kann. Die Fixierung wird dabei auf das Ende der Wendeln beschränkt, so dass die Wendeln im Bereich ihrer übrigen Länge durch die Fügeeinrichtung seitlich verlagert werden können, um Platz für die neu abzulegende Wendel zu schaffen.

Vorzugsweise verschiebt man die Wendeln an ihrem Ende um eine Strecke, die einer Breite des Verdrängungssporns der Fügeeinrichtung entspricht.

Der Verdrängungssporn kann dann in den freigegebenen Raum eingesetzt werden, ohne dass er in nachteiliger Weise auf bereits auf der Arbeitsfläche liegenden Wendeln einwirkt. Bei einer weiteren Bewegung der Fügeeinrichtung über die Arbeitsfläche kann der Verdrängungssporn dann die auf der Arbeitsfläche liegenden Wendeln verschieben, um Platz für die neu abzulegenden Wendeln zu schaffen. Der Verdrängungssporn hat eine Breite, die etwas kleiner ist als die Breite der abzulegenden Wendeln. Diese Breite ist die Erstreckung der Wendeln parallel zur Arbeitsfläche. Dies führt dann dazu, dass die neu abgelegte Wendel mit der bereits auf der Arbeitsfläche liegenden Wendeln in überlappenden Eingriff kommt. In den überlappenden Bereich kann dann ein Steckdraht eingesetzt werden.

Vorteilhafterweise sichert man auf der Arbeitsfläche abgelegte Wendeln gegen eine Bewegung von der Arbeitsfläche weg. Dies betrifft nicht nur das Ende der Wendeln, die dem ersten Rand benachbart sind, sondern auch die übrige Länge der Wendeln. Hierbei muss keine größere Kraft auf die Wendeln ausgeübt werden. Es reicht aus, wenn man eine Bewegung der Wendeln von der Arbeitsfläche aus begrenzt.

Auch ist von Vorteil, wenn man einen Steckdraht in einen Überlappungsraum benachbarter Wendeln einführt, wobei der Steckdraht eine Spitze aufweist, die der Fügeeinrichtung folgt. Der Steckdraht kann eingeführt werden, sobald zwei benachbarte Wendeln miteinander in Eingriff gebracht worden sind. Der Abstand zwischen der Spitze des Steckdrahtes und der Fügeeinrichtung kann also relativ klein gehalten werden, so dass es auch nur kurze Abschnitte gibt, in denen benachbarte Wendeln zwar miteinander in Eingriff stehen, aber noch nicht miteinander verbunden sind. Dies ist eine weitere Maßnahme, um ein Bewegen von Wendeln weg von der Arbeitsfläche zu verringern.

Die Erfindung wird im Folgenden anhand eines bevorzugten Ausführungsbeispiels in Verbindung mit der Zeichnung beschrieben. Hierin zeigen:

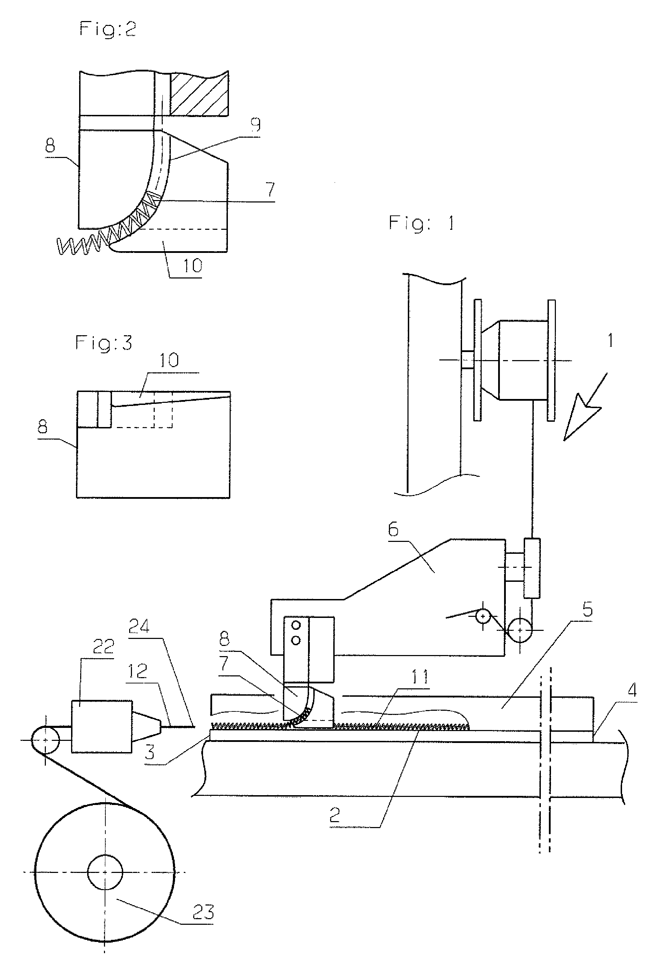

- Fig. 1: eine schematische Seitenansicht einer Vorrichtung zum Herstellen von Wendelsieben,
- Fig. 2: eine schematische Darstellung einer Fügeeinrichtung in vergrößerter Seitenansicht,
- Fig. 3: eine Draufsicht von unten auf die Fügeeinrichtung nach Fig. 2,
- Fig. 4: eine Draufsicht von oben auf die Vorrichtung zum Herstellen von Wendelsieben und
- Fig. 5: eine Vorderansicht der Vorrichtung zur Herstellung von Wendelsieben.

Alle Figuren zeigen lediglich schematische Darstellungen zur Erläuterung der Erfindung. In allen Figuren sind gleiche Elemente mit den gleichen Bezugszeichen versehen.

Eine Vorrichtung 1 zum Herstellen von Wendelsieben weist eine Arbeitsfläche 2 auf, die einen ersten Rand 3 und einen zweiten Rand 4 aufweist. Auf der Arbeitsfläche ist ein Anschlag 5 angeordnet, der sich vom ersten Rand 3 bis zum zweiten Rand 4 erstreckt.

Oberhalb der Arbeitsfläche 2 ist eine Wickeleinrichtung 6 angeordnet, die auch als "Wendelspender" bezeichnet werden kann. Die Wickeleinrichtung 6 erzeugt eine Wendel 7 aus einem Draht, beispielsweise einem Kunststofffilament, das einem nicht näher dargestellten Vorrat, beispielsweise einer Vorratsrolle, entnommen wird.

Während der Erzeugung der Wendel 7 kann die Wickeleinrichtung 6 über die Arbeitsfläche 2 hinweggefahren werden und zwar in einer Richtung vom ersten Rand 3 zum zweiten Rand 4.

Die Wickeleinrichtung 6 führt die Wendel 7 einer Fügeeinrichtung 8 zu. Die Fügeeinrichtung 8 wird bei der Herstellung eines Wendelsiebs ebenfalls über die Arbeitsfläche 2 verfahren und zwar ebenfalls in eine Richtung vom ersten Rand 3 zum zweiten Rand 4.

Hierbei kann die Fügeeinrichtung 8 in Anlage am Anschlag 5 bewegt werden.

Die Fügeeinrichtung 8 weist einen Kanal 9 auf, durch den die Wendel 7 geführt wird. Die Fügeeinrichtung 8 weist an ihrer Unterseite einen Verdrängungssporn 10 auf, der in Bewegungsrichtung der Fügeeinrichtung 8 eine Keilform aufweist. Der Verdrängungssporn 10 hat seine größte Breite am hinteren Ende, also an dem Ende der Fügeeinrichtung 8, das dem ersten Rand 3 zugewandt ist. Die größte Breite des Verdrängungssporns 10 ist kleiner als die Breite der erzeugten Wendel 7, also die Erstreckung der Wendeln parallel zur Arbeitsfläche und senkrecht zum Anschlag 5.

Wenn die Fügeeinrichtung 8 mit dem Verdrängungssporn 10 zwischen dem Anschlag 5 und einer bereits auf der Arbeitsfläche 2 liegenden Wendel 11 vom ersten Rand 3 zum zweiten Rand 4 bewegt wird, dann verdrängt der Verdrängungssporn 10 die bereits auf der Arbeitsfläche 2 aufliegenden Wendel 11 oder die aufliegenden Wendeln vom Anschlag 5 weg und erzeugt so einen Freiraum, in dem die neu erzeugte Wendel 7 von der Wickeleinrichtung 6 eingelegt werden kann.

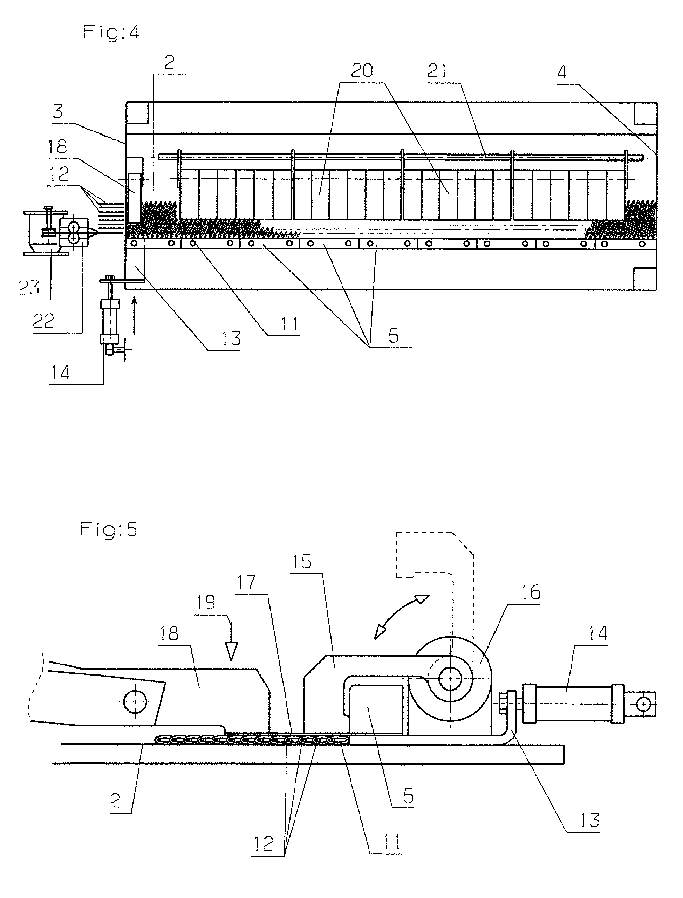

Der Verdrängungssporn 10 hat dabei eine größte Breite quer zur Bewegungsrichtung vom ersten Rand 3 zum zweiten Rand 4, die etwas kleiner ist als die Breite der Wendel 7 , vorzugsweise kleiner als die halbe Breite der Wendel 7. Dadurch wird die neue Wendel 7 beim Ablegen in Eingriff gebracht mit der bereits auf der Arbeitsfläche 2 aufliegenden Wendeln 11. Es ergibt sich ein Überlappungsbereich, in den ein Steckdraht 12 eingeführt werden kann (Fig. 5), um die einander überlappenden Wendel 7, 11 miteinander zu verbinden.

Sobald die Fügeeinrichtung 8 über die Breite der Arbeitsfläche 2 zum ersten Rand 3 zum zweiten Rand 4 bewegt worden ist, wobei diese Bewegung gleichlaufend mit einer entsprechenden Bewegung der Wickeleinrichtung 6 erfolgen kann, wird die dann auf der Arbeitsfläche 2 abgelegte Wendel 7 durchtrennt und die Fügeeinrichtung 8 wird gemeinsam mit der Wickeleinrichtung 6 wieder zum ersten Rand 3 zurückbewegt. Selbstverständlich können auch mehr als die dargestellte eine Fügeeinrichtung 8 und die eine dargestellte Wickeleinrichtung 6 vorhanden sein, so dass bei einer Rückbewegung einer Fügeeinrichtung 3 und einer Wickeleinrichtung 6 bereits eine andere Fügeeinrichtung 3 mit einer anderen Wickeleinrichtung 6 eine neue Wendel 7 auf der Arbeitsfläche 2 ablegen kann.
Die bisher beschriebene Vorgehensweise ist DE 10 2007 052 594 B4 bekannt. Für weitere Einzelheiten wird auf diese Schrift verwiesen.

Um den Beginn des Ablegevorgangs zu erleichtern, ist im Bereich des ersten Rands 3 der Arbeitsfläche 2 ein Schieber 13 vorgesehen, der durch einen Antrieb 14 betätigt werden kann. Der Schieber 13 hat einen Bewegungshub, der etwa genauso groß ist, wie die größte Breite des Verdrängungssporns 10 quer zur Bewegungsrichtung der Fügeeinrichtung 8. Der Bewegungshub ist jedoch nicht sehr viel größer als die größte Breite des Verdrängungssporns 10.

Wie nur in Fig. 5 dargestellt ist, ist im Bereich des Schiebers 13 ein Niederhalter 15 vorgesehen, der aus der in Fig. 5 mit durchgezogenen Linien dargestellten Abdeckposition in eine gestrichelt dargestellte Freigabeposition verschwenkt werden kann. Hierzu ist ein Schwenkantrieb 16 vorgesehen. In der Abdeckposition ist der Niederhalter 15 oberhalb der bereits auf der Arbeitsfläche abgelegten Wendel 11 angeordnet, wirkt jedoch nicht oder jedenfalls nicht mit einer größeren Kraft auf die Wendel 11. Der Niederhalter verhindert lediglich, dass die Wendel 11 sich von der Arbeitsfläche 2 vertikal wegbewegt, wenn der Schieber 13 betätigt wird. Der Schieber 13 hat eine Dicke, also eine Erstreckung in eine Richtung weg von der Arbeitsfläche 2, die mindestens so groß ist wie die halbe Höhe der Wendeln 11. Der Schieber 13 kann damit die Wendeln 11 in ihrem Masseschwerpunkt antreiben, so dass auch durch diese Maßnahme das Risiko klein gehalten wird, dass die Wendeln 11 sich von der Arbeitsfläche 2 entfernen.

Der Niederhalter 15 greift in einen Raum ein, der zwischen dem Anschlag 5 und einer Abdeckeinrichtung 17 vorgesehen ist. Die Abdeckeinrichtung 17 ist beispielsweise als dünnes Blech mit einer Dicke von 0,1 bis 1 mm, vorzugsweise 0,1 bis 0,3 mm ausgebildet. Die Abdeckeinrichtung 17 hat ebenfalls die Aufgabe, eine Bewegung der Wendeln 11 von der Arbeitsfläche 2 weg zu verhindern. Die Abdeckeinrichtung übt keine Klemmkraft auf die Wendel 11 aus.

Auf der dem Anschlag 5 abgewandten Seite der Abdeckeinrichtung 17 ist eine Niederhalteeinrichtung oder Siebfixierung 18 angeordnet, die durch einen Kraftgeber mit einer Kraft 19 beaufschlagt werden kann, um die auf der Arbeitsfläche 2 abgelegten Wendeln 11 auf der Arbeitsfläche festzuklemmen.

Wie man in Fig. 4 erkennen kann, sind weitere Niederhaltereinrichtungselemente 20 über die Breite der Arbeitsfläche 2 verteilt angeordnet. Sie sind an einer Achse 21 verschwenkbar gehalten und liegen lediglich mit ihrer Gewichtskraft auf den auf der Arbeitsfläche 2 abgelegten Wendeln 11 auf. Sie erlauben damit eine Bewegung der abgelegten Wendeln 11, verhindern aber ein Entfernen der Wendeln 11 von der Arbeitsfläche 2.

Zum Herstellen eines Wendelsiebes wird zunächst eine Wendel 7 auf der Arbeitsfläche 2 abgelegt. Hierbei fährt die Fügeeinrichtung 8 entlang des Anschlags 5 vom ersten Rand 3 zum zweiten Rand 4 über die Arbeitsfläche 2 und bildet damit eine abgelegte Wendel 11. Nach dem Durchtrennen fährt die Fügeeinrichtung 8 wieder an ihren Ausgangspunkt am ersten Rand 3 zurück.

Bevor die Fügeeinrichtung 8 damit beginnt, eine weitere Wendel 7 abzulegen, tritt der Schieber 13 in Aktion und schiebt das dem ersten Rand 3 benachbarte Ende der abgelegten Wendeln 11 um eine Entfernung quer zur Bewegungsrichtung der Fügeeinrichtung 8, die der Breite des Verdrängungssporns 10 entspricht. Bei dieser Verschiebung ist der Niederhalter 15 in die in Fig. 5 mit durchgezogenen Linien dargestellte Position verschränkt, d.h. er verhindert ein Entfernen der abgelegten Wendeln 11 von der Arbeitsfläche 2.

Wenn der Schieber 13 betätigt wird, wird die Siebfixierung 18 deaktiviert, d.h. sie liegt lediglich noch mit ihrer Gewichtskraft auf den abgelegten Wendeln 11 auf, ohne aber einer Klemmkraft auf die abgelegten Wendeln 11 auszuüben. Dementsprechend ist eine Bewegung der Wendeln durch den Schieber 13 möglich. Ein Ausweichen der Wendeln 11, also einer Bewegung weg von der Arbeitsfläche 2, ist hingegen nicht möglich.

Sobald die Bewegung des Schiebers 13 beendet ist, wird die Siebfixierung 18 wieder aktiviert, also die Kraft 19 erzeugt, so dass die abgelegten Wendeln auf der Arbeitsfläche 2 festgeklemmt werden und damit eine definierte Position einnehmen.

Der Niederhalter 15 wird dann in die in Fig. 5 gestrichelt dargestellte Freigabeposition verschwenkt, so dass die Fügeeinrichtung an die Position des Niederhalters 15 treten kann. Der Verdrängungssporn 10 der Fügeeinrichtung 8 tritt dann in einen Raum ein, der durch die Tätigkeit des Schiebers 13 neben dem Anschlag 5 frei geworden ist. Sobald der Verdrängungssporn 10 in diesen Raum eingetreten ist, kann er durch seine Keilform die abgelegten Wendeln 11 verschieben, wenn er vom ersten Rand 3 zum zweiten Rand 4 der Arbeitsfläche 2 verschoben wird.

Da der Schieber 13, wie in Fig. 5 erkennbar ist, zwischen der Arbeitsfläche 2 und dem Anschlag 5 angeordnet ist, kann die Funktion des Anschlags 5 auch im Bereich des Schiebers 13 weiter erfüllt werden, d.h. der Anschlag 5 kann als Anlagefläche für die Fügeeinrichtung 8 dienen.

Der Steckdraht 12 wird von einer Steckdrahteinführvorrichtung 22 zugeführt, die den Steckdraht von einer Vorratsspule 23 abzieht. Die Steckdrahteinführvorrichtung 22 wird aktiviert, sobald die Fügeeinrichtung 8 begonnen hat, die Wendel 7 auf der Arbeitsfläche 2 abzulegen und mit der bereits auf der Arbeitsfläche 2 liegenden Wendeln 11 in Eingriff zu bringen. Der Steckdraht 12 weist also eine Spitze 24 auf, die der Fügeeinrichtung 8 mit einem kleinen Abstand folgt. Nur in diesem Abstand gibt es keine Verbindung zwischen der neu zugeführten Wendel 7 und der bereits abgelegten Wendeln 11. Hierzu ist es lediglich erforderlich, die Steckdrahteinführvorrichtung 22 und den Antrieb der Fügeeinrichtung 8 und gegebenenfalls den Antrieb der Wickeleinrichtung 6 miteinander zu synchronisieren.

## Patentansprüche

1. Vorrichtung (1) zum Herstellen von Wendelsieben mit einer Arbeitsfläche (2) und einer Fügeeinrichtung (8), mit der Wendeln (7) auf der Arbeitsfläche (2) ablegbar sind und die mit einer Bewegungsrichtung von einem ersten Rand (3) der Arbeitsfläche zu einem zweiten Rand (4) der Arbeitsfläche (2) über die Arbeitsfläche (2) bewegbar ist, wobei die Fügeeinrichtung (8) einen Verdrängungssporn (10) aufweist, der bei einer Bewegung der Fügeeinrichtung (8) über die Arbeitsfläche (2) die auf der Arbeitsfläche liegenden Wendeln (11) verschiebt, um Platz für neu abzulegende Wendeln (7) zu schaffen, **dadurch gekennzeichnet, dass** im Bereich des ersten Randes (3) ein Schieber (13) an der Arbeitsfläche (2) angeordnet ist, der senkrecht zur Bewegungsrichtung der Fügeeinrichtung (8) verlagerbar ist, um das dem ersten Rand (3) benachbarte Ende der bereits auf der Arbeitsfläche (2) liegenden Wendeln (11) zu verschieben, bevor die Fügeeinrichtung (8) mit dem Ablegen einer neuen Wendel (7) beginnt.

2. Vorrichtung nach Anspruch 1, **dadurch gekennzeichnet, dass** der Schieber (13) einen Bewegungshub aufweist, der mindestens der Breite des Verdrängungssporns (10) entspricht.

3. Vorrichtung nach Anspruch 1 oder 2, **dadurch gekennzeichnet, dass** ein Anschlag (5) auf der Arbeitsfläche (2) vorgesehen ist, an dem die Fügeeinrichtung (8) entlang bewegbar ist, wobei der Schieber (13) zwischen dem Anschlag (5) und der Arbeitsfläche (2) angeordnet ist.

4. Vorrichtung nach einem der Ansprüche 1 bis 3, **dadurch gekennzeichnet, dass** im Bereich des Schiebers (13) ein Niederhalter (15) vorgesehen ist, der zwischen einer Abdeckposition, in der er auf der Arbeitsfläche (2) liegende Wendeln (11) abdeckt, und einer Freigabeposition, in der ein Zugang der Fügeeinrichtung (8) zu auf der Arbeitsfläche (2) liegenden Wendeln (11) möglich ist, bewegbar ist.

5. Vorrichtung nach einem der Ansprüche 1 bis 4, **dadurch gekennzeichnet, dass** im Bereich des ersten Randes (3) eine Abdeckeinrichtung (17) mit einem Abstand zur Arbeitsfläche angeordnet ist, die ein Ausweichen der Wendeln (11) weg von der Arbeitsfläche (2) verhindert.

6. Vorrichtung nach einem der Ansprüche 1 bis 5, **dadurch gekennzeichnet, dass** im Bereich des ersten Randes (3) eine lösbare Siebfixierung (18) vorgesehen ist.

7. Vorrichtung nach einem der Ansprüche 1 bis 6, **dadurch gekennzeichnet, dass** mit einem vorbestimmten Abstand zum ersten Rand (3) eine Niederhalteeinrichtung (20, 21) angeordnet ist, die einen Bewegungsraum der abgelegten Wendeln (11) in eine Richtung von der Arbeitsfläche (2) weg begrenzt.

8. Vorrichtung nach einem der Ansprüche 1 bis 7, **dadurch gekennzeichnet, dass** eine Steckdrahteinführvorrichtung (22) vorgesehen ist, die mit der Fügeeinrichtung (8) synchronisiert ist.

9. Verfahren zum Herstellen von Wendelsieben, bei dem man nacheinander mehrere Wendeln (7, 11) mit einer Fügeeinrichtung (8), die man in einer Bewegungsrichtung von einem ersten Rand (3) einer Arbeitsfläche (2) zu einem zweiten Rand (4) der Arbeitsfläche (2) über der Arbeitsfläche (2) verlagert, auf der Arbeitsfläche (2) ablegt und beim Ablegen nebeneinander angeordnete Wendeln (7, 11) durch die Fügeeinrichtung (8) miteinander in Eingriff bringt, wobei bei einer Bewegung der Fügeeinrichtung (8) über die Arbeitsfläche (2) die auf der Arbeitsfläche liegenden Wendeln (11) durch einen Verdrängungssporn (10) der Fügeeinrichtung (8) verschoben werden, um Platz für neu abzulegende Wendeln (7) zu schaffen, **dadurch gekennzeichnet, dass** man die Wendeln (11) an ihrem dem ersten Rand benachbarten Ende quer zu ihrer Längsrichtung verschiebt, bevor die Fügeeinrichtung (8) mit dem Ablegen einer neuen Wendel (7) beginnt.

10. Verfahren nach Anspruch 9, **dadurch gekennzeichnet, dass** man das Ende der Wendeln (11) beim Verschieben abdeckt.

11. Verfahren nach Anspruch 9 oder 10, **dadurch gekennzeichnet, dass** man die Wendeln (11) im Bereich des Endes nach dem Verschieben gegen eine Bewegung fixiert.

12. Verfahren nach einem der Ansprüche 9 bis 11, **dadurch gekennzeichnet, dass** man die Wendeln (11) an ihrem Ende um eine Strecke verschiebt, die einer Breite des Verdrängungssporns (10) der Fügeeinrichtung (8) entspricht.

13. Verfahren nach einem der Ansprüche 9 bis 12, **dadurch gekennzeichnet, dass** man auf der Arbeitsfläche (2) abgelegte Wendeln (11) gegen eine Bewegung von der Arbeitsfläche (2) weg sichert.

14. Verfahren nach einem der Ansprüche 9 bis 13, **dadurch gekennzeichnet, dass** man einen Steckdraht (12) in einen Überlappungsraum benachbarter Wendeln (11) einführt, wobei der Steckdraht (12) eine Spitze (24) aufweist, die der Fügeeinrichtung (8) folgt.

## Claims

1. Apparatus (1) for manufacturing coil screens, comprising a working surface (2) and a joining device (8) with which coils (7) can be deposited on the working surface (2) and which can be moved over the working surface (2) in a direction of movement from a first edge (3) of the working surface to a second edge (4) of the working surface (2), wherein the joining device (8) comprises a displacement spur (10) which displaces the coils (11) already positioned on the working surface when the joining device (8) is moved over the working surface (2) to create a clear space for the newly to be displaced coils (7), **characterized in that** in the region of the first edge (3), a slider (13) is arranged on the working surface (2) which can be moved perpendicularly to the direction of movement of the joining device (8), to displace the end adjacent to the first edge (3) of the coils already deposited on the working surface (2) before the joining device (8) starts depositing a new coil (7).

2. Apparatus according to claim 1, **characterized in that** the slider (13) has a movement stroke which is at least equal to the width of the displacement spur (10).

3. Apparatus according to claim 1 or 2, **characterized in that** a stop (5) is provided on the working surface (2), along which stop the joining device (8) can be moved, wherein the slider (13) is arranged between the stop (5) and the working surface (2).

4. Apparatus according to one of claims 1 through 3, **characterized in that** a holding-down means (15) is provided in the region of the slider (13), which means can be moved between a covering position, in which it covers coils (11) positioned on the working surface (2), and a release position, in which access by the joining device (8) to coils (11) positioned on the working surface (2) is possible.

5. Apparatus according to one of claims 1 through 4, **characterized in that** a covering device (17) is arranged at a distance from the working surface in the region of the first edge (3), to prevent deviating of the coils (11) away from the working surface (2).

6. Apparatus according to one of claims 1 through 5, **characterized in that** a releasable coil securing means (18) is provided in the region of the first edge (3).

7. Apparatus according to one of claims 1 through 6, **characterized in that** a clamping-down device (20, 21) is arranged at a predetermined distance to the first edge (3), which device restricts a space of movement of the deposited coils (11) in a direction away from the working surface (2).

8. Apparatus according to one of claims 1 through 7, **characterized in that** a fixing wire insertion device (22) is provided which is synchronized with the joining device (8).

9. Method for manufacturing coil screens in which multiple coils (7, 11) are consecutively deposited on a working surface (2) by means of a joining device (8) that is moved over the working surface (2) in a direction of movement from a first edge (3) of the working surface (2) to a second edge (4) of the working surface (2) and in which coils (7, 11) arranged side by side are brought into engagement with one another by the joining device (8) during the depositing, wherein on a movement of the joining device (8) over the working surface (2) the coils (11) already deposited on the working surface are displaced by means of a displacement spur (10) to create a clear space for the newly to be deposited coils (7), **characterized in that** the coils (11) are at their end adjacent to the first edge (3), displaced transverse to their longitudinal direction before the joining device (8) begins depositing a new coil (7).

10. Method according to claim 9, **characterized in that** the end of the coils (11) are covered during the displacement.

11. Method according to claim 9 or 10, **characterized in that** the coils (11) are secured against a movement in the region of the end after the displacement.

12. Method according to one of claims 9 through 11, **characterized in that** the coils (11) are displaced at their end by a distance which corresponds to a width of the displacement spur (10) of the joining device (8).

13. Method according to one of claims 9 through 12, **characterized in that** coils (11) deposited on the working surface (2) are secured against a movement away from the working surface (2).

14. Method according to one of claims 9 through 13, **characterized in that** a fixing wire (12) is inserted into an overlap space of adjacent coils (11), wherein the fixing wire (12) comprises a tip (24) that follows the joining device (8).

## Revendications

1. Dispositif (1) pour fabriquer des tamis à hélices avec une surface de travail (2) et avec un dispositif d'aboutage (8), avec lequel des hélices (7) peuvent être déposées sur la surface de travail (2) et qui peut être déplacé au-dessus de la surface de travail (2) avec un sens de déplacement d'un premier bord (3) de la surface de travail à un deuxième bord (4) de la surface de travail (2), le dispositif d'aboutage (8) comportant un éperon de déplacement (10) qui, lors d'un mouvement du dispositif d'aboutage (8) au-dessus de la surface de travail (2), déplace les hélices (11) placées sur la surface de travail pour faire de la place pour de nouvelles hélices (7) à déposer, **caractérisé en ce qu'**un coulisseau (13) est agencé sur la surface de travail (2) dans la zone du premier bord (3), lequel coulisseau peut être déplacé perpendiculairement au sens de déplacement du dispositif d'aboutage (8) pour déplacer l'extrémité, voisine du premier bord (3), des hélices (11) déjà placées sur la surface de travail (2) avant que le dispositif d'aboutage (8) commence à déposer une nouvelle hélice (7).

2. Dispositif selon la revendication 1, **caractérisé en ce que** le coulisseau (13) a une course de déplacement qui correspond au moins à la largeur de l'éperon de déplacement (10).

3. Dispositif selon la revendication 1 ou 2, **caractérisé en ce qu'**une butée (5) est prévue sur la surface de travail (2), butée le long de laquelle le dispositif d'aboutage (8) peut être déplacé, le coulisseau (13) étant agencé entre la butée (5) et la surface de travail (2).

4. Dispositif selon l'une des revendications 1 à 3, **caractérisé en ce que**, dans la zone du coulisseau (13), il est prévu un serre-flan (15) qui peut être déplacé entre une position de recouvrement dans laquelle il recouvre des hélices (11) placées sur la surface de travail (2) et une position de dégagement dans laquelle un accès du dispositif d'aboutage (8) à des hélices (11) placées sur la surface de travail (2) est possible.

5. Dispositif selon l'une des revendications 1 à 4, **caractérisé en ce que**, dans la zone du premier bord (3), un dispositif de recouvrement (17) est agencé avec une certaine distance à la surface de travail, lequel dispositif de recouvrement empêche que les hélices (11) s'écartent de la surface de travail (2).

6. Dispositif selon l'une des revendications 1 à 5, **caractérisé en ce qu'**une fixation de tamis (18) amovible est prévue dans la zone du premier bord (3).

7. Dispositif selon l'une des revendications 1 à 6, **caractérisé en ce qu'**un dispositif repoussoir (20, 21) est agencé à une distance prédéterminée du premier bord (3) pour limiter un espace de mouvement des hélices déposées (11) dans une direction les éloignant de la surface de travail (2).

8. Dispositif selon l'une des revendications 1 à 7, **caractérisé en ce qu'**il est prévu un dispositif d'introduction de fil de liaison (22) qui est synchronisé avec le dispositif d'aboutage (8).

9. Procédé pour fabriquer des tamis à hélices, selon lequel on dépose successivement sur la surface de travail (2) plusieurs hélices (7, 11) avec un dispositif d'aboutage (8) que l'on déplace au-dessus d'une surface de travail (2) dans un sens de déplacement d'un premier bord (3) de la surface de travail (2) à un deuxième bord (4) de la surface de travail (2) et selon lequel, au moyen du dispositif d'aboutage (8), on amène en prise les unes avec les autres des hélices (7, 11) déposées les unes à côté des autres
et selon lequel, lors d'un mouvement du dispositif d'aboutage (8) au-dessus de la surface de travail (2), on déplace au moyen d'un éperon de déplacement (10) du dispositif d'aboutage (8) les hélices (11) placées sur la surface de travail pour faire de la place pour de nouvelles hélices (7) à déposer, **caractérisé en ce qu'**on déplace les hélices (11) au niveau de leur extrémité voisine du premier bord transversalement à leur direction longitudinale avant que le dispositif d'aboutage (8) commence à déposer une nouvelle hélice (7).

10. Procédé selon la revendication 9, **caractérisé en ce qu'**on recouvre l'extrémité des hélices (11) lors du déplacement.

11. Procédé selon la revendication 9 ou 10, **caractérisé en ce que**, après le déplacement, on fixe les hélices (11) dans la zone de l'extrémité pour éviter tout mouvement.

12. Procédé selon l'une des revendications 9 à 11, **caractérisé en ce qu'**on déplace les hélices (11), à leur extrémité, d'une distance qui correspond à une largeur de l'éperon de déplacement (10) du dispositif d'aboutage (8).

13. Procédé selon l'une des revendications 9 à 12, **caractérisé en ce qu'**on protège des hélices (11) déposées sur la surface de travail (2) contre tout mouvement les éloignant de la surface de travail (2).

14. Procédé selon l'une des revendications 9 à 13, **caractérisé en ce que** l'on introduit un fil de liaison (12) dans un espace de chevauchement d'hélices (11) voisines, le fil de liaison (12) ayant une pointe (24) qui suit le dispositif d'aboutage (8).
